# DEMANDE DE BREVET EUROPEEN

(11) **EP 1 903 480 A1**
(43) Date de publication de la demande: **26.03.2008**
(21) Numéro de dépôt: 06291501.2
(22) Date de dépôt: 22.09.2006
(51) Int. Cl.: G06K 19/077

(54) **Dispositif portable comprenant deux supports de données séparables et utilisables par deux lecteurs différents, et procédé de fabrication**

(71) Demandeur: Axalto S.A., 92190 Meudon (FR)
(72) Inventeur: Legros, Charles, c/o Axalto S.A., 92190 Meudon (FR); Provost, Stéphane, c/o Axalto S.A., 92190 Meudon (FR); Billard, Oliver, c/o Axalto S.A., 92190 Meudon (FR); Froger, Alexis, c/o Axalto S.A., 92190 Meudon (FR)
(74) Mandataire: Fragnaud, Aude

(57) **Abrégé**

L'invention concerne un dispositif portable comprenant des supports de données aptes à être séparés et lus par des lecteurs de types différents. Le dispositif selon l'invention comprend une première partie (P1), destinée à supporter un premier support (13) de données et présentant une première épaisseur (E1) ; une deuxième partie (P2), destinée à supporter un deuxième support (3) de données, présentant une deuxième épaisseur (E2) supérieure à la première épaisseur (E1), de sorte qu'une marche (MAR) est créée entre lesdites première (P1) et deuxième (P2) parties ; et en ce que la marche (MAR) créée entre la première et la deuxième partie constitue un guide rectiligne (CTMAR) le long duquel la première partie (P1) de plus faible épaisseur (E1) supportant le premier support (13) de données peut être déchirée.

## Description

La présente invention concerne un dispositif portable comprenant des supports de données aptes à être séparés et lus par des lecteurs de types différents.

L'invention se situe dans le domaine de la carte à puce. Elle vise plus particulièrement les cartes séparables en deux parties, comportant deux applications différentes. Ainsi, il peut s'agir d'une carte supportant une application téléphonique et un disque optique de type DVD, ou d'une carte supportant un plug au format carte SIM prépayée, encore dénommée « token », et un disque optique de type DVD, ou bien d'une carte supportant une carte GSM avec plug et une partie identificatrice du client sur piste magnétique, etc....

L'invention porte plus particulièrement sur la séparation du corps de carte, comprenant deux supports de données différents, en deux parties égales ou non.

La demande de brevet WO 2004/006179 décrit un dispositif portable sécable qui comporte un support de données de type optique et un circuit intégré. Ce dispositif est réalisé comme un disque optique de type DVD en polycarbonate, selon une technique connue, puis il est usiné pour, d'une part, réaliser une cavité destinée à recevoir un module de carte à puce, et, d'autre part, lui donner la forme d'une carte à puce comportant au moins une ligne de rupture. La carte ainsi formée, comporte un disque optique de forme carrée ou rectangulaire après séparation selon la ligne de rupture et une carte à puce au format carte SIM.

Par ailleurs, il est également connu de mouler des cartes en polycarbonate transparent et comprenant au moins deux zones séparées par une ligne de rupture. Une cavité est moulée dans l'une des zones pour recevoir un module, et un trou de centrage est moulé dans une autre zone qui constitue un disque optique. Un disque de matériau réfléchissant est ensuite collé de manière centrée autour du trou de centrage et une étiquette de protection est collée sur l'ensemble.

Ces deux techniques permettent d'obtenir une carte à puce dont une partie séparable se transforme en disque optique et une autre partie se transforme en carte à puce au format SIM par exemple. Un inconvénient de ces techniques réside dans le fait qu'il est nécessaire de mouler et d'usiner du polycarbonate. Or le moulage et l'usinage du polycarbonate sont relativement coûteux pour des formes aussi complexes. Egalement, le placement d'un module dans une carte en polycarbonate s'avère coûteux et difficile à maîtriser pour de la production de masse.

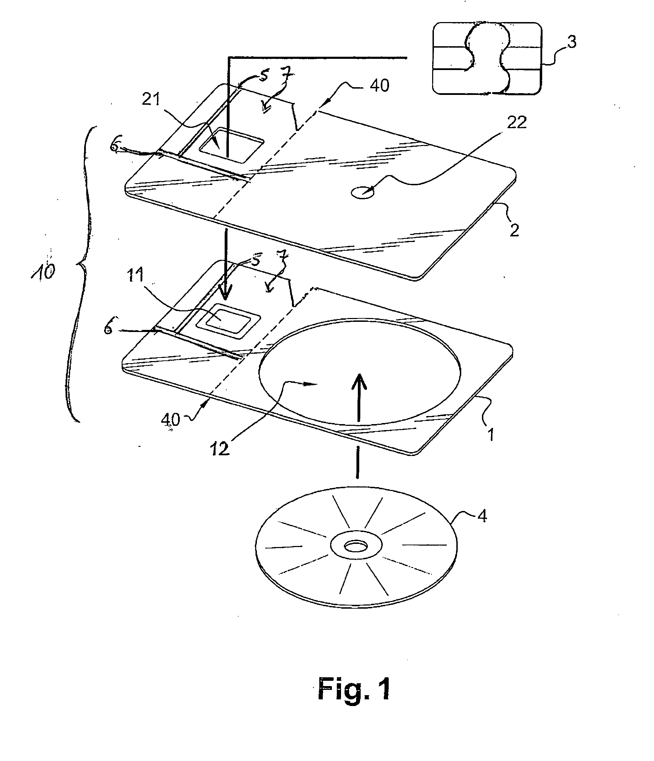

Pour remédier à ce problème de coût, une solution, telle qu'illustrée en perspective éclatée sur la figure 1, consiste à fabriquer le disque optique 4 séparément, puis à l'assembler sur un corps de carte réalisé au format ISO dans des matériaux traditionnels pour la fabrication de cartes et donc moins coûteux et plus facile à mettre en oeuvre. Pour cela, le corps de carte comprend deux couches 1 et 2. Une cavité 11 est réalisée dans la première couche 1 pour y recevoir un module électronique 3. Un trou circulaire 12 est aussi pratiqué dans cette première couche et forme une cavité destinée à y recevoir le disque optique 4. La deuxième couche 2, collée sur la première couche 1, comprend un trou circulaire 22 de diamètre inférieur à celui du premier trou circulaire 12 et centré sur le même axe. Ce trou 22 est de même taille que le trou situé dans le disque 4 pour l'entraîner en rotation dans un lecteur de disque. Une ouverture 21, pratiquée dans la deuxième couche 2 en regard de la cavité 11 de la première couche 1, présente la forme et la taille du connecteur du module 3 et permet ainsi de laisser le connecteur affleurer la surface de la carte. Après l'assemblage des couches de constitution de la carte, au moins une ligne de rupture 40 est prévue en effectuant une pré-découpe au laser, afin de permettre la séparation du DVD du reste de la carte comprenant le module électronique. Cette séparation est prévue pour éviter les vibrations créées lors de l'utilisation d'une telle carte au format ISO dans un lecteur DVD, du fait que le disque DVD n'est pas centré sur la carte. La pré-découpe peut avoir la forme d'une incision soit selon un trait continu recto et/ou verso sur toute la largeur de la carte, c'est-à-dire parallèlement au petit côté de la carte, soit selon des pointillés.

D'autres zones de pré-découpe 5, 6 peuvent être pratiquées pour réaliser un plug 7 au format carte SIM par exemple. Ces zones de prédécoupe 5,6 sont réalisées selon un procédé classique de réalisation d'un plug par enlèvement de matière dans certaines zones autour du plug.

L'inconvénient de cette solution réside dans le fait que le procédé de fabrication est complexe à mettre en oeuvre car il implique un grand nombre d'étapes pour fabriquer le corps de carte, notamment pour usiner des cavités et des ouvertures adaptées aux différents supports et pour assembler les différents éléments du corps de carte. Les coûts de production sont donc encore trop élevés pour une production de masse. De plus, pour des corps de carte de faible épaisseur, la ligne de rupture fragilise beaucoup trop le corps de carte qui se casse trop facilement, de manière totalement involontaire.

Aussi, un premier problème technique objet de la présente invention consiste à proposer un dispositif portable comprenant au moins deux supports de données aptes à être séparés, qui présenterait une résistance accrue à la flexion ou à la torsion pour éviter toute cassure impromptue des deux parties comprenant chacune un support de données, tout en permettant une séparation facile de ces deux parties par un utilisateur final lorsqu'il souhaite les séparer.

La solution au problème technique posé est obtenue, selon la présente invention, par le fait que le dispositif comprend une première partie, destinée à supporter un premier support de données et présentant une première épaisseur ; une deuxième partie, destinée à supporter un deuxième support de données, présentant une deuxième épaisseur supérieure à la première épaisseur, de sorte qu'une marche est créée entre lesdites première et deuxième parties ; et en ce que la marche créée entre la première et la deuxième partie constitue un guide rectiligne le long duquel la première partie, de plus faible épaisseur et supportant le premier support de données, peut être déchirée.

Ainsi, le dispositif ne présente plus de ligne de rupture ou de pré-découpe puisque aucune incision en trait continu ou en traits pointillés n'est prévue dans le dispositif. La marche suffit à créer un guide pour pouvoir déchirer la partie de plus faible épaisseur de manière rectiligne, de façon à séparer les deux parties.

Un autre problème technique objet de la présente invention consiste à proposer un procédé de fabrication d'un dispositif portable comprenant au moins deux supports de données aptes à être séparés par déchirure, qui serait plus simple que les procédés existants pour pouvoir diminuer les coûts de production et permettre une production de masse, et qui permettrait de réaliser un dispositif présentant une résistance accrue à la cassure impromptue des deux parties, comprenant chacune un support de données, tout en permettant une séparation facile de ces deux parties par un utilisateur final lorsqu'il souhaite les séparer.

Une première solution à ce problème est obtenue, selon la présente invention, par le fait que le procédé comprend les étapes de :
- fabrication d'une première couche d'un matériau polymère de telle sorte que les molécules de polymère soient alignées et orientées parallèlement au sens de la déchirure,
- fabrication d'une deuxième couche d'un matériau polymère de telle sorte que les molécules de polymère soient alignées et orientées parallèlement au sens de la déchirure,
- laminage des deux couches ainsi fabriquées,
- enlèvement de matière sur une première partie du corps du dispositif ainsi obtenu par laminage, de manière à former une marche entre cette première partie et une deuxième partie du corps du dispositif, ladite marche étant destinée à former un guide de séparation le long duquel la première partie peut être déchirée, et
- réalisation d'une cavité dans la deuxième partie du corps du dispositif.

Une deuxième solution à ce problème est obtenue, selon la présente invention, par le fait que le procédé comprend les étapes de :
- moulage d'un corps dans un premier matériau, le corps comprenant une première partie présentant une première épaisseur, une deuxième partie présentant une deuxième épaisseur supérieure à la première épaisseur, de sorte qu'une marche est créée entre lesdites première et deuxième parties,
- démoulage du corps ainsi obtenu,
- positionnement et assemblage d'un premier support de données réalisé dans un autre matériau sur la première partie du corps,
- positionnement et assemblage d'un deuxième support de données sur la deuxième partie du corps du dispositif.

Ainsi, quel que soit le mode de réalisation selon l'invention, le procédé de fabrication comporte moins d'étapes de fabrication que dans les procédés existants et requiert moins d'étapes d'usinage de cavités ou d'ouvertures. Cette simplification du procédé de fabrication entraîne par conséquent une diminution des coûts de production. D'autre part, le procédé permet de créer un dispositif présentant une résistance accrue à la flexion ou à la torsion car il ne présente pas de ligne de rupture.

D'autres particularités et avantages de l'invention apparaîtront à la lecture de la description suivante faite à titre d'exemple illustratif et non limitatif, en référence aux figures annexées qui représentent :
- la figure 1, un schéma en perspective éclatée d'un dispositif portable comprenant deux supports de données séparables conforme à l'art antérieur connu,
- la figure 2, un schéma en perspective éclatée d'un dispositif selon l'invention,
- les figures 3A à 3C, des schémas représentant les différentes étapes d'un procédé de fabrication d'un dispositif conforme à l'invention,
- la figure 4, un schéma en perspective d'un dispositif réalisé selon le procédé des figures 3A à 3C, montrant la manière dont une première partie est séparée de la deuxième partie,
- la figure 5, un schéma en vue de dessus d'un autre dispositif selon l'invention.

Pour faciliter la compréhension de l'invention et mieux visualiser certains détails les schémas représentés sur les figures ne sont pas réalisés à l'échelle. Par ailleurs, les mêmes références sont utilisées pour désigner les mêmes éléments.

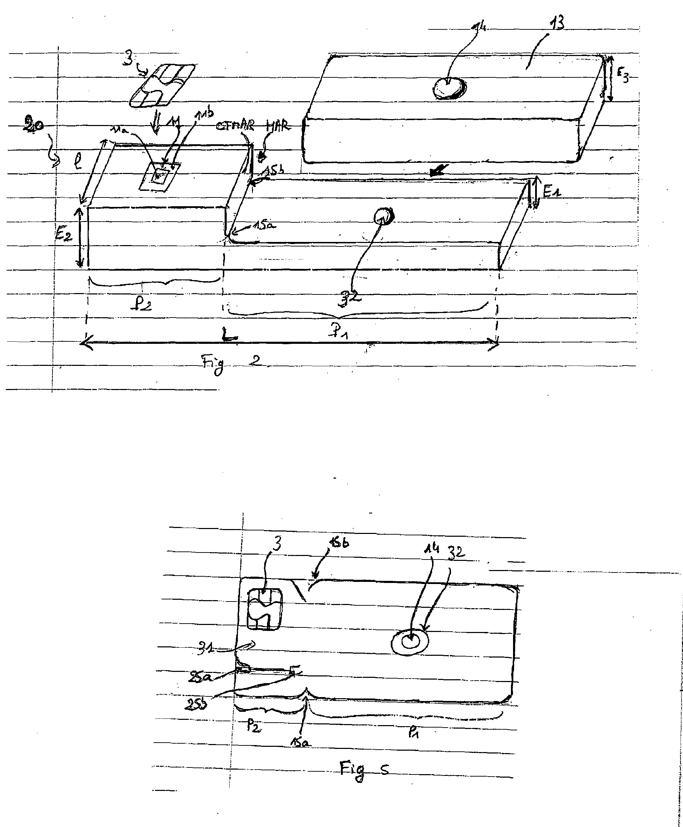

Le schéma en perspective éclatée de la figure 2 représente un dispositif portable comprenant deux supports de données destinés à des applications différentes et lisibles par des lecteurs de types différents.

De préférence le dispositif portable est une carte à puce dont la largeur 1 et la longueur L sont compatibles avec le format ISO 7816-1. Ce dispositif comprend deux parties P1 et P2. Chaque partie supporte respectivement un support de données. La première partie P1 présente une première épaisseur E1 et la deuxième partie P2 présente une deuxième épaisseur E2 supérieure à la première épaisseur E1, de sorte qu'une marche MAR est créée entre les deux parties P1 et P2. Ces deux parties représentent le corps 20 du dispositif et peuvent être réalisées dans tout type de matériau plastique de type ABS (Acrylonitrile Butadiène Styrène), PVC (Polychlorure de vinyle), ABS/PVC, PET (polyéthylène téréphtalate) ou encore PETg (PET glycol) par exemple.

La marche MAR présente une contre-marche CTMAR constituant un guide pour une déchirure rectiligne de la première partie P1 en vue de sa séparation du reste de la carte. En effet, la première partie du corps du dispositif étant d'une faible épaisseur E1, comprise entre 200 et 600 *µ*m, elle est souple et peut facilement être déchirée. Cependant pour que la déchirure soit propre et rectiligne, elle doit être guidée. La marche MAR contribue à former un tel guide.

Dans l'exemple schématisé sur la figure 2, une double cavité 11 est ménagée dans la deuxième partie P2 du corps de carte. Cette cavité est destinée à recevoir un module électronique 3. Le module 3 est inséré dans la cavité et fixé par exemple par dépôt d'une goutte de colle soit dans le fond de la seconde cavité 11a, soit sur le velodrome 11b de la double cavité. Le module 3 est un module connu de carte à puce, réalisé selon une technique connue. De préférence, la deuxième partie P2 présente une épaisseur E2 de l'ordre de 800*µ*m compatible avec la norme ISO 7816-1.

Un disque optique 13, de type DVD, est ensuite reporté sur la première partie P1 par collage par exemple. Ce disque est réalisé en polycarbonate selon un procédé de fabrication connu pour la réalisation de disques optiques. Ce disque 13 présente une forme sensiblement parallélépipédique épousant la surface de la première partie P1 du corps de carte. Il a par ailleurs une épaisseur E3 standard de l'ordre de 600µm et de 1000µm au niveau de la collerette définissant le pourtour du trou circulaire 14 du DVD et prévue pour l'entraînement en rotation du DVD dans un lecteur de disque. Avec les technologies actuelles de fabrication des disques optiques, il est maintenant possible de réaliser des disques carrés ou rectangulaires, par usinage ou par moulage de disques de diamètre 8 ou 12 cm, présentant une telle épaisseur amincie.

Par ailleurs, un trou circulaire débouchant 32 est ménagé dans la première partie P1. Ce trou circulaire 32 est plus grand que le trou 14 d'entraînement de manière à s'assurer que les deux trous 14 et 32 sont bien disposés de manière concentrique lorsque le DVD est reporté sur la première partie du dispositif.

De préférence, la marche MAR, définissant le sens de la déchirure, est parallèle à la largeur 1 de la carte, c'est-à-dire au petit côté de la carte.

De manière facultative, il est possible de prévoir au moins une encoche 15a, 15b à au moins une extrémité de la marche MAR, afin de favoriser une amorce de déchirure le long de la contre-marche CTMAR.

Cette (ou ces) encoche(s) 15a, 15b pourra prendre différentes formes. Elle pourra notamment être soit de forme arrondie, avec un rayon de courbure compris par exemple entre 3 et 3,5 mm, soit en forme de pointe de flèche.

Le dispositif ainsi représenté est compatible avec les dimensions d'une carte à puce, telle qu'une carte à puce téléphonique prépayée ou une carte bancaire pour application porte-monnaie par exemple, permettant ainsi aux utilisateurs de telles cartes de les insérer dans un lecteur existant, dédié respectivement aux cartes téléphoniques ou aux cartes bancaires. Dans cet exemple, lorsque la carte téléphonique prépayée est vidée, ou lorsque le porte-monnaie est vidé, l'utilisateur final peut déchirer la première partie de la carte supportant le disque optique de type DVD, pour l'insérer dans un lecteur DVD classique afin de visualiser un contenu vidéo.

Avantageusement, un tel dispositif peut être fabriqué par moulage. Dans ce cas, les première et deuxième parties du corps de carte sont réalisées dans le même matériau plastique, et le moule permet de réaliser le corps de carte en une seule étape, avec la cavité 11, le trou circulaire débouchant 32 et la, ou les, encoche(s) 15 éventuelle(s).

Après le démoulage du corps de carte, le module électronique 3 est inséré dans la cavité 11 ménagée dans la deuxième partie P2 de la carte, tandis que le disque optique 13 est collé sur la première partie P1 de la carte de sorte que le trou circulaire débouchant 32 et le trou 14 du disque soient disposés en face à face.

Il est à noter que sur le dispositif représenté sur les figures 2 à 4, le module 3 et le DVD 13 sont disposés sur le même face du dispositif. Cependant, l'invention ne se limite pas à ce cas de figure, et le module 3 et le DVD 13 peuvent chacun être reporté sur une face différente du dispositif.

Les figures 3A à 3C sont des schémas en coupe permettant d'illustrer les étapes d'un procédé de fabrication du dispositif selon un autre mode de réalisation.

Selon ce deuxième mode, le corps de carte est réalisé par la technique dite de calandrage qui consiste à fabriquer des feuilles de grandes dimensions, en matériau thermoplastique, par extrusion puis à laminer les feuilles entre plusieurs cylindres parallèles constituant une machine appelée calandre. Cette technique permet d'aligner les molécules de polymère les unes par rapport aux autres et de les orienter dans le matériau. Plusieurs corps de carte peuvent ainsi être réalisés simultanément sur les grandes feuilles, puis chaque carte est découpée en fin de procédé.

Ainsi, une première couche C1 est réalisée dans un premier matériau thermoplastique tel que par exemple le PVC, l'ABS, le PVC/ABS, le PET ou PETg etc... Cette couche C1 présente une première épaisseur E1, de préférence comprise entre 200 et 600µm.

Une deuxième couche C2, réalisée dans un deuxième matériau thermoplastique, qui peut être identique ou différent du premier matériau de constitution de la première couche, est ensuite disposée sur la première couche C1. Cette deuxième couche présente une épaisseur E4 telle que le résultat de l'addition entre cette épaisseur E4 et la première épaisseur E1 soit égale à l'épaisseur E2 de la deuxième partie P2 de la carte. De plus, pour que la deuxième partie P2 du dispositif, supportant le module électronique 3, soit compatible avec la norme ISO 7816-1 , il faut que la deuxième épaisseur E2 soit de l'ordre de 800µm. Par conséquent, l'épaisseur E4 de la deuxième couche C2 est de préférence comprise entre 500 et 550µm.

Les deux couches C1 et C2 ainsi fabriquées sont assemblées par laminage.

L'étape suivante (figure 3B) consiste ensuite à enlever de la matière sur une première partie P1 du corps de carte obtenu par laminage. La surface de matière enlevée constitue ainsi un logement pour y reporter un premier support de données. L'épaisseur de matière enlevée peut varier selon le support de données à placer. Dans l'exemple décrit, il est préférable d'enlever toute l'épaisseur de la deuxième couche C2, voire même une partie de la première couche C1, pour pouvoir ensuite y placer un disque optique de type DVD dont l'épaisseur est en général de l'ordre de 600 µm. L'épaisseur de la couche résiduelle dans la première partie P1 de la carte est donc comprise entre 200 et 600µm.

Cet enlèvement de matière permet de créer une marche entre les deux parties P1 et P2 d'épaisseurs différentes, la contre-marche CTMAR servant alors de guide rectiligne pour déchirer la première partie P1 d'épaisseur plus faible lorsqu'on veut la séparer de la deuxième partie P2.

L'enlèvement de matière peut se faire selon deux techniques : par fraisage ou par dépastillage.

Pour pouvoir enlever de la matière par fraisage, soit la feuille de couches laminées, soit une carte déjà découpée au format ISO, est disposée sur une table aspirante pour la maintenir en position. La table aspirante est composée de petits trous servant à l'aspiration sur une surface correspondant à la surface soit de la grande feuille ou d'une carte ISO. L'aspiration peut se faire par venturi ou par pompe à vide. Les paramètres d'usinage sont ensuite réglés pour permettre l'obtention de tolérances de forme très précises.

La technique de dépastillage consiste à faire pénétrer une lame dentée dans la deuxième couche C2 à l'endroit ou doit être créée la marche. Dans ce cas, il est préférable de disposer un anti-adhérant, par exemple par sérigraphie, sur la première couche C1, sur une surface correspondant à la première partie P1 du corps de carte. Ainsi, après avoir découpé la deuxième couche C2 au moyen de la lame dentée, la deuxième couche est facilement enlevée du fait de la présence de l'anti-adhérant. Cette technique de dépastillage est surtout adaptée lorsque l'épaisseur de matière à enlever correspond exactement à l'épaisseur E4 de la deuxième couche C2. Ainsi, on évite de faire une prédécoupe avec la lame dentée dans la couche C1 afin de ne pas fragiliser le corps du dispositif pour ne pas que la partie P1 de plus faible épaisseur se casse et se détache de la deuxième partie P2 de manière impromptue.

Dans ce mode de réalisation par laminage de couches, il est important que les molécules de polymère soient alignées et orientées parallèlement au sens de la déchirure pour pouvoir avoir une déchirure rectiligne le long du guide créé CTMAR. C'est pourquoi, pour ce mode de fabrication, il est important de fabriquer les couches C1 et C2 selon la technique de calandrage. En effet, si les molécules de polymère ne sont pas orientées correctement, c'est-à-dire si elles sont orientées dans l'autre sens, perpendiculairement au sens de la déchirure, la déchirure ne sera pas de bonne qualité car elle ne sera pas rectiligne et voudra suivre l'orientation des molécules. Malgré l'existence de la contre-marche CTMAR pour servir de guide, si les molécules ne sont pas orientées parallèlement à cette contre-marche, la déchirure risque donc de ne pas être rectiligne mais de suivre un chemin anarchique. Dans ce cas, une fois la première partie séparée de la deuxième, le disque optique 13 risque de ne pas avoir de couche support C1 par endroits.

Dans le procédé par moulage, l'orientation des molécules de polymère dans le matériau importe peu et la déchirure suit toujours le guide rectiligne constitué par la contre-marche CTMAR. En effet, dans ce cas la matière plastique liquide se répand dans l'empreinte d'un moule et elle n'est pas étirée dans un sens ou dans un autre. Par conséquent, les molécules de polymère ne sont pas orientées dans un sens ou dans un autre. Ce manque d'orientation des molécules ne détériore pas la qualité de la déchirure qui se fait de manière rectiligne le long de la contre-marche.

L'étape ultérieure du procédé (figure 3C) consiste ensuite à ménager un trou circulaire débouchant 32 dans la première couche C1 et dans la première partie P1 de la carte, de sorte que lorsque le disque optique 13 est assemblé à la partie P1, les trous 14 et 32 sont disposés de manière concentrique. L'assemblage du disque se fait par exemple par collage. Le disque est réalisé dans un autre matériau que celui du corps de carte. Classiquement, il est réalisé en polycarbonate.

Une double cavité 11 est par ailleurs pratiquée, par fraisage par exemple, dans la deuxième partie P2 de la carte pour y loger le module électronique 3. Le module est par exemple fixé par collage sur le vélodrome 11b de la cavité. La profondeur de la cavité est réglée de sorte qu'une fois le module reporté dans la cavité, les plages de contact de son bornier de connexion affleurent la surface de la carte.

Ensuite, si cela n'a pas déjà été fait dans une étape précédente, les cartes au format ISO sont découpées dans les grandes feuilles.

Pendant l'étape de découpe des cartes, au moins une encoche peut également être prévue à au moins une extrémité de la marche MAR de manière à favoriser l'amorce de la déchirure.

L'ensemble ainsi obtenu est une carte à puce présentant une largeur 1 et une longueur L compatibles avec le format ISO, et dont la deuxième partie P2 présente une épaisseur E2 compatible avec le format ISO. Cette carte à puce dispose en outre, sur une autre partie P1, d'un disque optique de type DVD. Cependant, le disque DVD n'est pas centré par rapport à la carte et l'utilisation de la carte ainsi formée dans un lecteur de disque est source de vibrations. Pour remédier à ces vibrations, il est donc prévu de pouvoir séparer la partie module P2 de la partie disque P1, par déchirure de la partie disque P1.

La figure 4 schématise la manière dont la première partie P1 du dispositif obtenu est séparée de la deuxième partie P2. Dans ce cas, l'utilisateur final déchire la première partie P1 de manière rectiligne le long du guide formé par la contre-marche CTMAR, dans le sens de la flèche F. La première partie supportant le disque optique peut ainsi être insérée dans un lecteur de disque pour pouvoir en lire le contenu.

La figure 5 montre, en vue de dessus, une variante de réalisation dans laquelle la deuxième partie P2 de la carte comporte un module sécable plus connu sous le nom de plug 31, par exemple au format carte SIM de longueur 25mm et de largeur 15mm. Dans ce cas, le plug 31 est réalisé de manière traditionnelle, par création de lignes de pré-découpe 25a, 25b dans l'épaisseur E2 du corps de carte. Ces lignes de pré-découpe sont réalisées de manière classique par enlèvement de matière dans certaines zones autour du plug. Par ailleurs, deux encoches 15a, 15B de forme arrondie dans l'exemple de la figure 5, sont prévues aux extrémités de la marche située entre les deux parties P1, P2 de manière à créer une amorce de déchirure et à faciliter cette déchirure. Sur cette figure, le module électronique 3 est disposé sur la face de dessus, alors que le DVD est reporté sur l'autre face.

L'exemple qui vient d'être décrit concerne un dispositif portable comprenant un module électronique et un disque optique de type DVD. Bien sûr, l'invention s'applique à d'autres dispositifs portables comprenant d'autres types de supports de données. Le dispositif portable pourra également comporter plus de deux supports de données séparables.

## Revendications

1. Dispositif portable comprenant au moins deux supports de données aptes à être séparés, **caractérisé en ce qu'**il comprend une première partie (P1), destinée à supporter un premier support (13) de données et présentant une première épaisseur (E1); une deuxième partie (P2), destinée à supporter un deuxième support (3) de données, présentant une deuxième épaisseur (E2) supérieure à la première épaisseur (E1), de sorte qu'une marche (MAR) est créée entre lesdites première (P1) et deuxième (P2) parties ; et **en ce que** la marche (MAR) créée entre la première et la deuxième partie constitue un guide rectiligne (CTMAR) le long duquel la première partie (P1) de plus faible épaisseur (E1) supportant le premier support (13) de données peut être déchirée.

2. Dispositif selon la revendication 1, **caractérisé en ce que** le premier support de données (13) est réalisé dans un matériau différent du matériau de constitution de la première partie (P1).

3. Dispositif portable selon la revendication 1 ou 2, **caractérisé en ce que** la deuxième partie (P2) comprend une cavité (11) destinée à recevoir le deuxième support (3) de données.

4. Dispositif portable selon l'une des revendications 1 à 3, **caractérisé en ce que** la première partie (P1) comprend un trou circulaire débouchant (32).

5. Dispositif portable selon l'une des revendications 1 à 4, **caractérisé en ce que** la première (P1) et la deuxième (P2) partie d'épaisseurs différentes sont en matériau polymère dont les molécules sont alignées et orientées parallèlement au sens de la déchirure.

6. Dispositif selon l'une quelconque des revendications précédentes, **caractérisé en ce qu'**au moins une encoche (15 ; 15a, 15b) est prévue à au moins une extrémité de la marche (MAR).

7. Dispositif selon l'une quelconque des revendications précédentes, **caractérisé en ce qu'**il se présente sous la forme d'une carte à puce.

8. Dispositif selon l'une quelconque des revendications précédentes, **caractérisé en ce que** le premier support (13) de données est un disque optique.

9. Dispositif selon l'une quelconque des revendications précédentes, **caractérisé en ce que** le deuxième support (3) de données est un module électronique.

10. Procédé de fabrication d'un dispositif portable comprenant au moins deux supports de données aptes à être séparés par déchirure, **caractérisé en ce que** ledit procédé comprend les étapes de :
- fabrication d'une première couche (C1) d'un matériau polymère de telle sorte que les molécules de polymère soient alignées et orientées parallèlement au sens de la déchirure,
- fabrication d'une deuxième couche (C2) d'un matériau polymère de telle sorte que les molécules de polymère soient alignées et orientées parallèlement au sens de la déchirure,
- laminage des deux couches (C1, C2) ainsi fabriquées,
- enlèvement de matière sur une première partie (P1) du corps du dispositif ainsi obtenu par laminage, de manière à former une marche (MAR) entre cette première partie (P1) et une deuxième partie (P2), ladite marche étant destinée à former un guide rectiligne (CTMAR) de séparation le long duquel la première partie (P1) peut être déchirée, et
- réalisation d'une cavité (11) dans la deuxième partie (P2) du corps du dispositif.

11. Procédé selon la revendication 10, **caractérisé en ce qu'**il comprend en outre les étapes de :
- fabrication d'un module électronique,
- fabrication d'un disque (13) optique dont la surface, sensiblement parallélépipédique, correspond à la surface de matière enlevée dans la première partie (P1),
- positionnement du disque (13) sur la première partie (P1) du corps du dispositif où de la matière à été enlevée,
- positionnement du module (3) dans la cavité (11) prévue dans la deuxième partie (P2) du corps du dispositif.

12. Procédé selon la revendication 10, **caractérisé en ce que** les première et deuxième couches (C1, C2) sont fabriquées par extrusion.

13. Procédé selon la revendication 10, **caractérisé en ce que** l'enlèvement de matière dans la première partie (P1) se fait par fraisage.

14. Procédé selon la revendication 10, **caractérisé en ce que** l'enlèvement de matière dans la première partie (P1) se fait par une technique de dépastillage.

15. Procédé selon l'une des revendications 10 à 14, **caractérisé en ce qu'**au moins une encoche (15 ; 15a, 15b) est découpée à au moins une extrémité de la marche (MAR).

16. Procédé de fabrication d'un dispositif portable comprenant au moins deux supports dé données aptes à être séparés par déchirure, ledit procédé comprenant les étapes de:
- moulage d'un corps dans un premier matériau, le corps comprenant une première partie (P1) présentant une première épaisseur (E1), une deuxième partie (P2) présentant une deuxième épaisseur (E2) supérieure à la première épaisseur (E1), de sorte qu'une marche (MAR) est créée entre lesdites première et deuxième parties,
- démoulage du corps ainsi obtenu,
- positionnement et assemblage d'un premier support (13) de données, réalisé dans un autre matériau, sur la première partie (P1) du corps,
- positionnement et assemblage d'un deuxième support (3) de données sur la deuxième partie (P2) du corps du dispositif.

17. Procédé de fabrication selon la revendication 17, **caractérisé en ce qu'**au moins une encoche (15 ; 15a, 15b) est formée à au moins une extrémité de la marche (MAR).

18. Procédé selon la revendication 17, **caractérisé en ce que**, lors de l'étape de moulage, une cavité (11), destinée à recevoir le deuxième support (3) de données, est réalisée dans la deuxième partie (P2) du corps du dispositif.

19. Procédé selon l'une des revendications 17 à 19, **caractérisé en ce que**, lors de l'étape de moulage, un trou circulaire (32) débouchant est pratiqué dans la première partie (P1) du corps du dispositif.
